# EUROPÄISCHE PATENTSCHRIFT

(11) **EP 3 259 150 B1**
(45) Veröffentlichungstag und Bekanntmachung des Hinweises auf die Patenterteilung: **19.09.2018**
(21) Anmeldenummer: 16703949.4
(22) Anmeldetag: 04.02.2016
(51) Int. Cl.: B60K 35/00, B60K 37/06

(54) **BEDIENKONSOLE IN EINEM KRAFTFAHRZEUG**
OPERATING CONSOLE IN A MOTOR VEHICLE
PANNEAU DE COMMANDE DANS UN VÉHICULE AUTOMOBILE

(30) Priorität: 06.02.2015 DE 102015101740
(43) Veröffentlichungstag der Anmeldung: 27.12.2017
(73) Patentinhaber: Dr. Schneider Kunststoffwerke GmbH, 96317 Kronach-Neuses (DE)
(72) Erfinder: SCHINZLER, Claus, 96317 Kronach (DE)
(86) Internationale Anmeldenummer: PCT/EP2016/052401
(87) Internationale Veröffentlichungsnummer: WO 2016/124697

(56) Entgegenhaltungen:
- EP-A1- 1 600 688
- DE-A1-102008 037 977
- KR-B1- 100 805 817
- KR-B1- 101 475 676
- US-A1- 2014 001 834

## Beschreibung

Die Erfindung betrifft eine Bedienkonsole in einem Kraftfahrzeug, vorzugsweise eine Bedienkonsole, die im Bereich des Armaturenbretts eines Kraftfahrzeugs oder im Bereich der Mittelkonsole eines Kraftfahrzeugs anzuordnen ist, mit den Merkmalen des Patentanspruchs 1.

Bekannte Bedienkonsolen zum Einsatz in Kraftfahrzeugen sind bereits hinlänglich bekannt. Bei solchen Bedienkonsolen handelt es sich um eine Ansammlung von Bedienelementen eines Kraftfahrzeugs, die an einer Stelle im Kraftfahrzeug zusammengefasst und dort angeordnet sind. Zumeist sind solche Bedienkonsolen und deren Bedienelemente beleuchtet.

Es hat sich aber gezeigt, dass der Anspruch an die Gestaltung und die Beleuchtung von Bedienkonsolen in Kraftfahrzeugen seit Jahren auf Grund der Designorientierung kontinuierlich ansteigt. So soll z. B. die Beleuchtung einzelner Bedienelemente einer Bedienkonsole in ihrer Helligkeit und/oder Farbe individuell einstellbar sein. Für Anwendungen im automotiven Bereich und insbesondere in Kraftfahrzeugen sind derartige Bedienkonsolen, wie vorherig beschreiben, noch nicht bekannt. Allerdings sind bereits aus anderen Bereichen Beleuchtungseinheiten bekannt, die individuell in der Lichtintensität und der Farbe einstellbar sind.

So ist aus der DE 20 2010 003 621 U1 eine Beleuchtungseinheit bekannt, die eine transparente Trägerplatte mit einer ersten Oberfläche, die mindestens teilweise mit mindestens einer lichtundurchlässigen Schicht beschichtet ist, bekannt. Die Beleuchtungseinheit besitzt ein auf einer ersten Oberfläche der transparenten Trägerplatte angeordnetes Gehäuse, dessen innere Oberfläche mindestens teilweise Lichtstrahlen reflektieren kann. Außerdem ist mindestens ein in einem Raum zwischen dem Gehäuse und der ersten Oberfläche der transparenten Trägerplatte angeordnetes Leuchtmittel vorhanden, wobei vom Leuchtmittel erzeugte Lichtstrahlen mindestens teilweise in die transparente Trägerplatte gelangen können. Mindestens ein Teil der inneren Oberfläche besitzt eine diffus reflektierende Oberfläche.

Aus der DE 10 2011 108 803 A1 ist eine Kunststofffolie mit Leitungen für eine multimodale Eingabevorrichtung bekannt. Bei der multimodalen Eingabevorrichtung handelt es sich insbesondere um eine solche, die ein Tauchmodul und ein Bedienelement verknüpft. Derartige Eingabevorrichtungen findet man in Mittelkonsolen von Kraftfahrzeugen, bei Spül- oder Waschmaschinen, Telefonen oder ähnlichen Vorrichtungen. Mittels dem Layout der Leiter in Form einer geometrisch verzerrten Matrix auf einer einzigen Kunststofffolie, die einen Träger für ein kombiniertes Eingabegerät bildet, können Tauchmodule einerseits und Bedienelement-Module andererseits verbunden werden. Hierzu werden im Randbereich der Leiterbahnmatrix des Tauchmoduls Leiterbahnen ausgelagert und an die Bedienelemente angeschlossen. Auf diese Weise entsteht eine geometrisch verzerrte Matrix aus Leitern auf der Kunststofffolie.

Aus der DE 10 2004 026 730 A1 ist eine Fläche mit elektrischen Verbrauchern, insbesondere Leuchtmitteln, bekannt. Durch die Leuchtmittel sind mittels der Fläche besondere optische Effekte erzielbar. Diese Effekte reichen von einzelnen Lichtpunkten, über bild-, schrift- bzw. musterartig angeordnete Lichtpunkte bis zur flächenhaften Ausstrahlung von Licht über die ganze Fläche. Die Leuchtmittel können dabei einfarbig, bunt oder farblich durchstimmbar sein. Es ist hierzu der Einsatz von RGB-LEDs vorgesehen. Die Leuchtmittel können dabei alle zusammen (Reihen-/Parallelschaltung), in Gruppen oder einzeln ansteuerbar sein. Bei einzelner oder gruppenweiser Ansteuerung von farblich durchstimmbaren Leuchtmitteln ist ein Farbmonitor ähnlicher Betrieb möglich.

Aus der DE 299 23 151 U1 ist ein Beleuchtungskörper, insbesondere zur Verwendung als Decken- und/oder Wandelement, bestehend aus einem Rahmenelement und zumindest einem für Licht wenigstens teilweise durchlässigen Medium, auf der dem Betrachter zugewandten Seite, bekannt. Hinter dem Medium ist eine Vielzahl von Einzellichtquellen vorgesehen, welche zumindest in einer Ebene liegend angeordnet und jeweils einzeln und individuell durch eine Steuereinheit mit Spannung beaufschlagbar sind.

Aus der DE 10 2008 037 977 A1 ist eine Anzeigevorrichtung für ein Fahrzeug mit einem Display, das im Innenraum des Fahrzeugs befestigt oder befestigbar ist, bekannt. Diese Anzeigevorrichtung besitzt eine Beleuchtungseinrichtung mit der eine das Display umgebende Beleuchtung erzeugbar ist. Es ist weiterhin eine Steuereinheit zum Steuern der von der Beleuchtungseinrichtung erzeugten Beleuchtung vorhanden.

Aus der DE 100 18 336 A1 ist ein Display zur Anordnung an der Instrumententafel eines Kraftfahrzeuges bekannt. Das Display ist mit einer Vielzahl von polymeren Leuchtdioden ausgebildet, die als Pixel-Elemente eines Displayfeldes für eine Anzeige von Fahrzuständen und Fehlerzuständen an Teilen des Fahrzeuges selektiv einschaltbar sind, wobei die Anzeigen auch farblich differenziert vermittelt werden können.

Aus DE 10 2006 038 175 A1 ist eine Anzeigevorrichtung für ein Kraftfahrzeug mit einer Anzeigefläche bekannt. Die Anzeigefläche weist einen Symbolbereich zur Darstellung fest vorgegebener Symbole auf, wobei die Anzeigefläche ferner einen Matrixbereich zur Darstellung von variablen Anzeigeinhalten besitzt.

Aus der DE 43 05 796 A1 ist eine Anordnung zur Kompensation von Farbverschiebung beim Dimmen von Glüh- oder Halogenlampen als Hinterleuchtung für eine Anzeigevorrichtung bekannt. Es werden zusätzlich zu den weißen Lampen blaue Lampen in der Beleuchtungseinrichtung angeordnet, sodass beim Herunterdimmen der in das Rotspektrum verschobene Farbort des weißen Lichtes kompensiert wird.

Aus EP 1 600 688 A1 ist eine Beleuchtungsfläche mit elektrischen, lichtemittierenden Verbrauchern bekannt. Durch die Leuchtmittel sind besondere optische Effekte erzielbar. Diese reichen von einzelnen Lichtpunkten, über bild-, schrift- beziehungsweise musterartig angeordnete Lichtpunkte bis zur flächenhaften Ausstrahlung von Licht über die ganze Beleuchtungsfläche. Die Leuchtmittel können dabei einfarbig, bunt oder farblich durchstimmbar (zum Beispiel RGB-LED) sein und alle zusammen (Reihen-/Parallelschaltung), in Gruppen, oder einzeln ansteuerbar sein. Bei einzelner oder gruppenweiser Ansteuerung von farblich durchstimmbaren Leuchtmitteln ist dabei sogar ein Farbmonitor ähnlicher Betrieb oder die Verwendung als Farbmonitor möglich. Weiterhin ist es bekannt die Beleuchtungsfläche als Wand-, Decken- oder Fensterelement auszugestalten und eine Wand, Fassade, Decke, Fensterelement, Theke, Dekoobjekt, Regal, Markise oder Markisenwagen mit einer solchen Beleuchtungsfläche auszustatten.

Aus der US 2014/0001834 A1 ist ein Benutzerinterface für ein Kraftfahrzeug bekannt. Das Benutzerinterface besitzt einen Drücksteller, der aus einem von einem Benutzer betätigbaren Einstellelement und einer zugehörigen Anzeigevorrichtung besteht. Sowohl der Drücksteller als auch die Anzeigevorrichtung sind beleuchtbar ausgestaltet, wobei die Beleuchtung in Abhängigkeit des Betriebszustandes des Kraftfahrzeugs erfolgt.

Aus der DE 10 2011 007 493 A1 ist eine Flüssigkristallanzeige mit einer Schaltungsanordnung zur Erzeugung von Signalen für die Ansteuerung einer Flüssigkristallzelle bekannt. Die Schaltungsanordnung dient zur Erzeugung von zusätzlichen Signalen, die im Ansteuersignalverlauf zeitlich vor oder nach den eigentlichen Ansteuersignalen eingebettet sind und zur Meidung eines übersprechbedingten Anzeigeflackerns dienen. Der Aufbau derartiger Flüssigkristallanzeigen ist seit langer Zeit bekannt und besteht zumeist in Form eines LCD-Moduls mit einer LCD-Zelle. Eine LCD-Zelle besteht z. B. aus zwei parallel angeordneten Glasscheiben, zwischen denen sich Flüssigkristall befindet. Eine der Scheiben ist vollflächig mit senkrecht verlaufenden transparenten Spaltenleiterbahnen beschichtet, während die andere Scheibe vollflächig mit waagerecht verlaufenden transparenten Zeilenleiterbahnen beschichtet ist. Die Kreuzungspunkte dieser Leiterbahnen stellen die Bildpunkte (Pixel) der LCD-Zelle dar. Über Spalten- und Zeilentreiber können an die Spalten- und Zeilenleiterbahnen Spannungspulse unterschiedlicher Form angelegt werden. Diese Spannungspulse werden von einer Steuerelektronik mit Hilfe von sogenannten Zeilentreibern und Spaltentreibern erzeugt. Die Steuerelektronik ist mit dem Zeilentreiber über eine Steuerleitung, beispielsweise in Form einer Sammelleitung oder eines Busses, und mit dem Spaltentreiber über eine weitere Steuerleitung, ebenfalls in Form einer Sammelleitung oder eines Busses, verbunden und führt diesen Treiberschaltungen entsprechende Treibersignale zur Auswahl der jeweils gewünschten, zur Anzeige zu bringenden Pixel, zu. Der Zeilentreiber und der Spaltentreiber sind über Leitungen mit der LCD-Zelle verbunden und legen an diese in an sich bekannter Weise Zeilen- und Spaltensignale an, durch die die jeweils ausgewählten Bildelemente selektiert und zur Bildpunktwiedergabe angeregt werden. Die Bilddarstellung muss bei jeder Änderung des Anzeigeinhalts aktualisiert werden, wobei die Zeilen und/oder Spalten einer LCD-Matrixzelle mit neuen Bilddaten beschrieben werden. Die nötigen Pixelspannungen werden durch den Zeilentreiber und den Spaltentreiber im Multiplexverfahren erzeugt.

Demzufolge liegt der vorliegenden Erfindung die Aufgabe zugrunde, eine Bedienkonsole zum Einsatz in einem Kraftfahrzeug zur Verfügung zu stellen, die es ermöglicht, die Beleuchtung der Bedienkonsole zu individualisieren.

Diese Aufgabe wird gemäß den Merkmalen des Patentanspruchs 1 gelöst.

Vorteilhafte Ausgestaltungen der Erfindung sind in den Unteransprüchen, der weiteren Beschreibung und insbesondere anhand eines Ausführungsbeispiels dargestellt.

Die vorliegende Erfindung betrifft eine Bedienkonsole in einem Kraftfahrzeug mit einer aus einem im Wesentlichen lichtundurchlässigen Material bestehenden Blende. Die Blende weist mindestens einen Bedienbereich und mindestens einen Visualisierungsbereich in Form mindestens einer Aussparung oder mindestens eines lichtdurchlässigen Bereichs auf. Einem jeden Bedienbereich oder einem jeden Visualisierungsbereich ist mindestens eine Beleuchtungsstelle zugeordnet, die mindestens eine Leuchtdiode aufweist. Diese Leuchtdiode ist eine RGB-Leuchtdiode. Die Beleuchtungsstellen der Blende sind elektrisch in einer Matrixstruktur angebunden. Diese Anbindung in einer Matrixstruktur erfolgt in der Weise, so dass eine jede der Beleuchtungsstellen einzeln und individuell oder eine Mehrzahl der Beleuchtungsstellen gemeinsam von einer elektronischen Steuereinheit in der Weise ansteuerbar sind, dass die Farbe und die Helligkeit einer jeden der Beleuchtungsstellen einzeln und individuell oder eine Mehrzahl der Beleuchtungsstellen gemeinsam in ihrer Helligkeit und Ihrer Farbe einstellbar sind.

Über die elektrische Verbindung der Beleuchtungsstellen in einer Matrixstruktur wird der Verkabelungsaufwand reduziert und damit zugleich eine kostengünstige Realisierung von individuell in der Beleuchtung einstellbaren Bedienkonsolen erreicht.

Gemäß einer Ausgestaltung der Erfindung ist vorteilhaft vorgesehen, dass die Matrixstruktur der Beleuchtungsstellen in einer elektrischen Anordnung der Beleuchtungsstellen in Reihen und Spalten ausgebildet ist.

Gemäß einer Ausgestaltung der Erfindung ist vorteilhaft vorgesehen, dass die mindestens eine Leuchtdiode eine RGB-Leuchtdiode oder eine RGBW-Leuchtdiode ist.

Gemäß der Erfindung ist vorgesehen, dass ein Bedienbereich, ein Schalter oder Taster oder ein Drehsteller oder ein Schieber ist und ein Visualisierungsbereich eine Anzeige, eine Teilumrahmung eines Bedienbereichs oder ein lichtdurchlässiger Bereich der Blende ist. An Stelle eines Tasters kann auch eine Touch-Oberfläche oder ein Touch-Bereich vorgesehen sein.

Gemäß einer Ausgestaltung der Erfindung ist vorteilhaft vorgesehen, dass die Ansteuerung der Beleuchtungsstellen im LED-Multiplex erfolgt.

Gemäß der Erfindung ist vorgesehen, dass ein Bedienbereich einen Taster oder Schalter für die Sitzheizung des Fahrersitzes im Kraftfahrzeug realisiert, über den in mehreren anwählbaren Stufen die Intensität der Energiezufuhr in die Sitzheizung des Fahrersitzes realisiert ist, wobei der Schalter oder Taster in einer rückwärtigen Aussparung der Bedienkonsole angeordnet ist, und wobei der Taster als induktiver oder kapazitives Bedienelement oder als ein Touch-Bedienelement hinter oder in der Blende angeordnet oder intergiert ist, wobei der Schalter oder Taster selbst in seiner Bedienoberfläche einen lichtdurchlässigen Bereich aufweist und die Aussparung von dem Visualisierungsbereich umgeben ist, wobei die dem Schalter oder Taster zugeordnete Beleuchtungsstelle hinter der Blende so angeordnet ist, dass diese sowohl den Schalter oder Taster umgebenden Visualisierungsbereich als auch den Schalter oder Taster selbst hinterleuchtet.

Gemäß einer Ausgestaltung der Erfindung ist vorgesehen, dass eine elektronische Steuereinheit die Beleuchtungsstelle derart ansteuert, dass die Helligkeit und/oder die Farbe der Beleuchtungsstelle in Abhängigkeit der gewählten Intensität der Energiezufuhr erfolgt.

Gemäß der Ausgestaltung der Erfindung ist vorteilhaft vorgesehen, dass über einen Drehschalter oder -steller die Innenraumbelüftung im Kraftfahrzeug einstellbar ist, wobei der Drehschalter oder -steller in einer Aussparung der Blende und der Bedienkonsole angeordnet ist und diese Aussparung von einem Visualisierungsbereich in der Blende umgeben ist und die dem Drehschalter oder -steller zugeordnete Beleuchtungsstelle von der elektronischen Steuereinheit in derart ansteuerbar ist, dass die Helligkeit und/oder die Farbe der Beleuchtungsstelle in Abhängigkeit der gewählten Drehzahl des den Luftstrom erzeugenden elektrischen Ventilators erfolgt.

Gemäß einer Ausgestaltung der Erfindung ist vorteilhaft vorgesehen, dass der den Bedienbereich umrahmende Visualisierungsbereich im Wesentlichen die gleiche Grundform aufweist, wie der vom Visualisierungsbereich teilumrahmte Bedienbereich.

Gemäß einer Ausgestaltung der Erfindung ist vorteilhaft vorgesehen, dass mittels der elektronischen Steuereinheit die Beleuchtungsstellen in ihrer Helligkeit und/oder ihrer Farbe einstellbar sind.

Nachfolgend wird die Erfindung anhand eines konkreten Ausführungsbeispiels anhand der Figuren FIG 1 bis FIG 5 dargestellt.

Die Beschreibung anhand des konkreten Ausführungsbeispiels stellt keine Limitierung der Erfindung auf dieses konkrete Ausführungsbeispiel dar.

Es zeigt:
- FIG 1: eine schematische Darstellung einer Bedienkonsole
- mit: mehreren Bedieneinheiten;
- FIG 2: eine weitere schematische Darstellung einer Bedienkonsole mit mehreren Bedieneinheiten;
- FIG 3: einen schematischen Aufbau einer elektrischen Beschaltung von Leuchtdioden;
- FIG 4: einen weiteren schematischen Aufbau einer elektrischen Beschaltung von Leuchtdioden; und
- FIG 5: eine Ausgestaltung einer der Leuchtdiode.

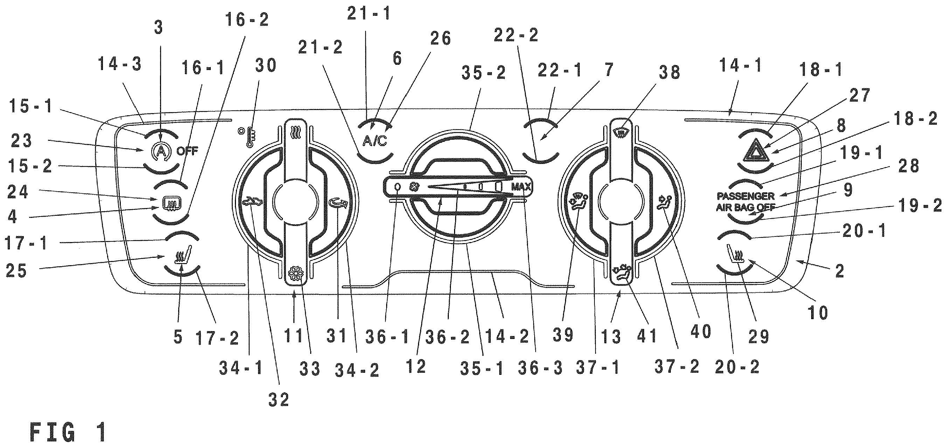

Das konkrete Ausführungsbeispiel gemäß den Figuren FIG 1 bis FIG 5 zeigt die Erfindung anhand einer Ausführung einer Bedienkonsole zum Einsatz in einem Kraftfahrzeug.

Zur besseren Verständlichkeit der Erfindung und zur besseren Übersichtlichkeit werden in den Figuren und der zugehörigen Figurenbeschreibung für gleiche Elemente gleiche Bezugszeichen verwendet.

In FIG 1 ist schematisch eine Bedienkonsole mit mehreren Bedieneinheiten zum Einsatz in einem Kraftfahrzeug dargestellt. Die Bedienkonsole 1 ist dazu vorgesehen in ein Armaturenbrett in einem Kraftfahrzeug eingebaut zu werden. Vorzugsweise ist im Armaturenbrett eine Vertiefung oder eine Aussparung vorgesehen, in welche die Bedienkonsole 1 einsetzbar ist. Die Bedienkonsole 1 wird im Armaturenbrett form- und/oder kraftschlüssig aufgenommen. In einer vorteilhaften Ausgestaltung der Erfindung ist die Bedienkonsole 1 mittels eines Schnapphalters, in den die Bedienkonsole einrastet, oder mehrerer Schrauben im Armaturenbrett befestigbar.

Die Bedienkonsole 1 besteht aus einer Blende 2, die vorzugsweise aus Kunststoff hergestellt ist. Das Material der Blende 2 ist im Wesentlichen lichtundurchlässig. Die Blende 2 ist in einer vorteilhaften Ausgestaltung der Erfindung als eine Folie ausgestaltet, die in einem Kunststoffspritzgussvorgang hinterspritzt wird, so dass die Blende 2 die sogenannte Sichtseite der Bedienkonsole 1 im eingebauten Zustand im Armaturenbrett ausbildet.

Rückseitig sind in die Bedienkonsole 1 Bedienelemente und Funktionselemente einfügbar, die über die Frontseite der Bedienkonsole 1 bedienbar und/oder sichtbar sind. Außerdem sind Anzeigen für Warnhinweise oder Bedieneinstellung vorhanden.

In der konkreten Ausgestaltung der Bedienkonsole 1 mit der Blende 2, sind in der Blende 2 und der Bedienkonsole 1 Bereiche zur Bedienung durch einen Nutzer und Bereiche zur Anzeigen von Information an bzw. für einen Nutzers vorhanden. Konkret sind acht Tasten 3 bis 10 vorhanden, wobei jeweils vier Tasten 3, 4, 5, 6 im linken Bereich zur vertikalen Mittelachse der Bedienkonsole 1 und vier Tasten 7, 8, 9, 10 im rechten Bereich der Bedienkonsole 1 angeordnet sind. Anstelle von Tasten können auch Taster zur Anwendung kommen.

Es sind diese vier Tasten 3, 4, 5, und 6 zu den vier Tasten 7, 8, 9 und 10 achsensymmetrisch zur vertikalen Mittelachse der Bedienkonsole 2 angeordnet.

Die Taste 3 dient zur Einstellung der Empfindlichkeit des ESP (elektronisches Fahr-Stabilitäts-Programm) des Kraftfahrzeugs. Nach dem Starten des Kraftfahrzeugs ist das ESP zunächst auf die empfindlichste Stufe eingestellt und greift sehr früh ein und bremst das Fahrzeug frühzeitig ein, wenn dieses droht auszubrechen. Die Taste 3 ist von zwei, jeweils ober- und unterhalb der Taste 3, angeordneten und der Taste 3 zugeordneten Beleuchtungsbogenabschnitten 15-1 und 15-2 umgeben, die als eine Aussparung in der Blende 2 oder in Form eines lichtdurchlässigen Bereichs in der Blende 2 realisiert sind. In der Rückseite der Bedienkonsole 2 sind Aussparungen vorhanden, in die elektrische Zuführungen bzw. Leitungen und Komponenten der Taste 3 einfügbar sind. Mittig zur Taste 3 ist ein Piktogramm 23 angeordnet, das lichtdurchlässig ausgebildet ist. Hinter der Taste 3, in FIG 1 nicht dargestellt, ist eine farbige Leuchtdiode, vorzugsweise eine RBG-Leuchtdiode angeordnet, die die Taste 3 und die Beleuchtungsbogenabschnitte 15-1 und 15-2 hinterleuchtet und deren Licht durch das Piktogramm 23 und die beiden Beleuchtungsbogenabschnitte 15-1 und 15-2 dringt.

Mittels einer der Bedienkonsole 1 zugeordneten Steuereinheit, die in FIG 1 nicht dargestellt ist, ist die Helligkeit der der farbigen Leuchtdiode einstellbar. Im Falle der Ausgestaltung farbigen Leuchtdiode als RBG-Leuchtdiode, d. h. eine Leuchtdiode die aus drei Leuchtdioden der Grundfarben rot, grün und blau besteht, die individuell ansteuerbar und einstellbar sind, insbesondere auch im Hinblick auf die anzugebende Lichtmenge und Intensität, kann eine jede für das menschliche Auge wahrnehmbare Farbe erzeugt und abgestrahlt werden. Die Ansteuerung der farbigen Leuchtdiode erfolgt beispielsweise mittels einer Pulsweitenmodulation.

Je nach der Anzahl der Stufen der Einstellung der Empfindlichkeit des ESP, kann die gewählte Einstellung des ESP durch die Wahl der Helligkeit und/oder der Farbe des durch die farbige Leuchtdiode erzeugten Lichts und damit der Hinterleuchtung der Taste 3 und der Beleuchtungsbogenabschnitte 15-1 und 15-2 einem Benutzer (dem Fahrer des Kraftfahrzeugs) dargestellt und visualisiert werden.

In der Ausgestaltung der Erfindung gemäß FIG 1 weist das ESP drei Einstellungsstufen auf, nämlich "ESP-Ein mit hoher Empfindlichkeit", "ESP-Ein mit geringer Empfindlichkeit" und "ESP-Aus". In der Ausgestaltung gemäß FIG 1 erfolgt bei der Einstellung "ESP-Ein mit hoher Empfindlichkeit" die Hinterleuchtung mit mittlerer Lichtintensität und der Farbe Grün, bei der Einstellung "ESP-Ein mit geringer Empfindlichkeit" die Hinterleuchtung mit höherer Lichtintensität und der Farbe Gelb und bei der Einstellung "ESP-Aus" die Hinterleuchtung mit maximaler Lichtintensität und der Farbe Rot.

Die Taste 4 dient zur Aktivierung der beheizbaren Heckscheibe. Mittig auf der Taste 4 ist ein Piktogramm 24, das das Symbol für beheizbare Heckscheibe darstellt, angeordnet. Das Piktogramm 24 ist lichtdurchlässig ausgestaltet. Vorteilhaft erfolgt dies, in dem die Blende 2 als Folie dargestellt ist und bei der Folie dieser Bereich und damit das Piktogramm 24 als durchsichtiger und lichtdurchlässiger Bereich ausgestaltet ist.

Hinter der Taste 4 ist wiederum eine farbige Leuchtdiode, vorzugsweise eine RGB-Leuchtdiode, angeordnet, die in ihrer Intensität der Lichtabgabe und der Farbe einstellbar ist. Die Taste 4 ist wiederum von zwei Beleuchtungsbogenabschnitten 16-1 und 16-2 umgeben. Diese sind analog wie das Piktogramm 24 ausgestaltet, so dass Licht, das von der angeordneten farbigen Leuchtdiode stammt, diese hinterleuchten und beleuchten kann. Es ist vorgesehen, dass bei nicht aktivierter Heckscheibe die Beleuchtung mit weißem Licht oder keine Hinterleuchtung erfolgt, bei Aktivierung der Heckscheibenheizung über die Taste 4 wird eine rote Hinterleuchtung eingestellt, d. h. die Lichtabgabe der zugehörigen farbigen Leuchtdiode wird von der Steuereinheit auf die Farbe "Rot" eingestellt und die Lichtabgabeintensität wird erhöht.

Bei der Taste 5 handelt es sich um die Einstellungswahl der Sitzheizung für den Fahrersitz. Diese ist in drei Stufen von leichter Erwärmung, mittlerer Erwärmung und großer Erwärmung wählbar. Auf der Taste 5 ist das Piktogramm 25, das die Funktion "Sitzerwärmung" bzw. "Sitzheizung" realisiert, dargestellt. Die Taste 5 ist, wie bereits vorherig zu den Tasten 3 und 4 beschrieben, in der Weise ausgeführt, dass Licht von hinten durch die Blende 2 hindurchdringen kann. Die Taste 5 ist wiederum von zwei Beleuchtungsbogenabschnitten 17-1 und 17-2 umgeben. Je nach gewählter Intensität der Sitzheizung wird dies durch Erhöhung der Lichtintensität bzw. durch Veränderung der Farbe, beispielsweise von hellrot nach dunkelrot oder von blau, was z. B. "Sitzheizung Aus" bedeutet, hin zu rot, was "Sitzheizung An" bedeutet, angezeigt. Dies erfolgt wiederum gesteuert durch die in FIG 1 nicht dargestellte Steuereinheit, deren Funktion analog ausgestaltet ist, wie bereits bei den Tasten 3 und 4 beschrieben.

Auf der rechten Seite der Bedienkonsole 1 ist die Taste 8 angeordnet. Die Taste 8 trägt wiederum ein Piktogramm 27, das die Funktion für eine Warnblinkleuchte darstellt. Die Taste 8 ist von zwei Beleuchtungsbogenabschnitten 18-1 und 18-2 umrandet. Bei Aktivierung der Taste 8 ist vorgesehen, die Hinterleuchtung in roter Farbe vorzunehmen. Ist die Funktion nicht gewählt, so wird mit weißem Licht hinterleuchtet. Die Funktionalität und die Ausgestaltung erfolgt analog zu den bereits beschriebenen Tasten 3, 4 und 5.

Unter dieser Taste 8 ist eine weitere Taste 9 angeordnet. Diese Taste 9 aktiviert die Funktion der An- und Abschaltung des Beifahrerairbags. Dies ist notwendig, wenn auf dem Beifahrersitz ein Kleinkind in einem dafür vorgesehenen Tragebehältnis im Fahrzeug mitgenommen werden soll. Durch Druck auf die Taste 9 ist der Beifahrerairbag aktivier- oder deaktivierbar. Die Taste 9, bzw. ein Bereich um die Taste 9, weist eine Beschriftung "Passengerairbag off" auf, die, wie bereits bei den vorherigen Piktogrammen 23, 24, 25 der Tasten 3, 4, 5 beschrieben, ausgestaltet ist. Diese Schrift ist lichtdurchlässig ausgestaltet ist. Die Taste 9 ist ebenfalls von zwei Beleuchtungsbogenabschnitten 19-1, 19-2 umgeben. Ist diese Taste 9 betätigt worden und die Funktion gewählt, so wird die Taste 9 und der zugehörige Bereich hinterleuchtet. Ist die Taste 9 nicht betätigt worden, erfolgt keine Hinterleuchtung. Es kann auch wiederum durch die Wahl der Farbe der Hinterleuchtung, beispielsweise rot oder grün, die Aktivierung des Beifahrerairbags, wie auch dessen Deaktivierung visualisiert werden, wobei z. B. bei Hinterleuchtung mit rot die Funktion deaktiviert ist, d. h. der Beifahrerairbag wäre ausgeschaltet, bei Hinterleuchtung mit grün würde dies z. B. bedeuten, dass der Fahrerairbag aktiviert ist.

Unter der Taste 9 ist eine Taste 10 vorgesehen, die von zwei Beleuchtungsbogenabschnitten 20-1, 20-2 umgeben ist. Es ist das Piktogramm 29 einer Sitzheizung dargestellt. Die Funktionsweise erfolgt analog zur bereits beschriebenen Taste 5.

In etwa mittig auf der linken Seite der Bedienkonsole 1 ist eine Taste 6 angeordnet. Die Taste 6 dient zur Aktivierung der Klimaanlage. Es ist die Beschriftung "A/C" 26, die z. B. auch als Piktogramm darstellbar ist, angeordnet, die für Klimaanlagen in Fahrzeugen verwendet wird, auf der Taste 6 vorhanden. Umgeben ist die Taste 6 von den zwei Beleuchtungsbogenabschnitten 21-1 und 21-2. Die Aktivierung oder Nichtaktivierung der dieser Taste 6 zugeordneten Funktion der Aktivierung und Deaktivierung Klimaanlage, wird wiederum durch Hinterleuchtung bzw. durch Auswahl der Farbe und/oder Intensität der Hinterleuchtung, wie bereits bei den vorherigen Tasten 3, 4, 5, 9, 10, beschrieben, visualisiert, beispielsweise steht die Farbe blau für aktiviert, und weis für nichtaktiviert.

Spiegelsymmetrisch zur vertikalen Mittenachse der Bedienkonsole 1 ist zur Taste 6 eine Taste 7 angeordnet. Diese ist funktionslos. Es kann dort eine weitere Funktion aufgenommen werden. Die Taste 7 ist wiederum von den Beleuchtungsbogenabschnitten 21-1 und 21-2 mit einer analogen Funktionsweise umgeben, wie bereits bei den vorherigen Tasten beschrieben.

Im Weiteren ist auf der linken Seite der Bedienkonsole 1 eine Anzeige 30 vorgesehen. Die Anzeige 30 ist mit einem Piktogramm ausgestaltet, das symbolisiert, wenn der Motor des Kraftfahrzeuges seine normale Betriebstemperatur überschreitet. Für den Fall, dass die Steuereinheit diese Anzeige 30, angesteuert von einer übergeordneten weiteren Steuereinheit, die diesen Zustand des Verbrennungsmotors detektiert, aktiviert, wird die Steuereinheit die Hinterleuchtung des Bereiches der Anzeige 30 mit der Farbe Rot und mit hoher Intensität vornehmen. Ist der Motor im "normalen" Temperaturbereich, wird die Anzeige 30 grün hinterleuchtet oder eine Hinterleuchtung unterbleibt.

Im Weiteren ist auf der linken Seite der Bedienkonsole 1 ein Drehsteller 11 vorgesehen. Der Drehsteller 11 ist in der Weise ausgestaltet, dass er um seine Mittenachse drehbar ist. Im Weiteren weist er eine Wipptastenfunktionalität auf, so dass durch Verkippen nach oben oder unten oder nach rechts oder links eine hinterlegte Funktion angewählt werden kann. In der Ausgestaltung gemäß FIG 1 ist vorgesehen, dass bei Drehen des Drehstellers 11 nach links oder rechts diejenige Funktion, die anhand des jeweiligen Piktogramms 31 oder 32 dargestellt ist, auswählbar ist. Durch Drücken auf den Drehsteller 11 im unteren Bereich wird die dortige mittels eines Piktogramms 33 dargestellte Funktion aktiviert.

Das Piktogramm 33 ist eine Schneeflocke und bedeutet, dass die Kraftfahrzeugbelüftung auf "Kühlen" zu stellen ist.

Die Piktogramme 31, 32 und 33 sowie die Bereiche um die Piktogramme 31, 32, 33 sind wiederum lichtdurchlässig ausgestaltet und hinterleuchtbar. Je nachdem, ob eine entsprechende Funktion gewählt oder nicht gewählt ist, erfolgt eine farbliche und lichtintensitätsmäßige Hinterleuchtung. Der Drehsteller 11 mit Wipptastenfunktion ist von zwei Halbumrahmungen 34-1, 34-2 umgeben, die die Funktion und die Stellung bzw. Ausgestaltung des Drehstellers 11 visuell unterstützen. Diese Halbumrahmungen 34-1, 34-2 sind wiederum lichtdurchlässig ausgestaltet, so dass über entsprechend im Rückbereich der Bedienkonsole 1 angeordnete Leuchtdioden, vorzugsweise RGB-Leuchtdioden, über die Steuereinheit eine farbliche Anwahl oder Leuchtintensität anstellbar ist.

Mittig ist ein Drehsteller 12 angeordnet. Der Drehsteller 12 weist zusätzlich eine Sensorschiebefunktion auf. Der Drehsteller 12 realisiert die Anwahl der Geschwindigkeit des Ventilators, der die Luftzuführung in den Innenraum des Kraftfahrzeuges regelt. Durch Drehen des Drehstellers 12 nach links oder nach rechts kann die Intensität des Luftstroms über die Drehzahl des Ventilators reguliert werden, von "0", links als Piktogramm 36-1 mit der Zahl "02 visualisiert, sowie nach rechts ansteigend, mit dem Piktogramm 36-2, das als ansteigender Balken realisiert ist, mit "max." auf der der "0" gegenüberliegenden Seite. Die Piktogramme 36-1, 36-2- 36-3 sind wiederum in der bereits beschriebenen Weise ausgestaltet, dass diese durch Hinterleuchtung visualisierbar sind. Der Drehsteller 12 ist von zwei Halbumrahmungen 35-1, 35-2 umgeben, welche in der bereits beschriebenen Weise lichtdurchlässig ausgestaltet und hinterleuchtbar sind.

Im Weiteren ist auf dem Drehsteller 12 eine Sensorschiebefunktion integriert, so dass durch Bewegen des Fingers eines Nutzers, der auf dem Sensorbereich, der durch das Piktogramm 36-2 markiert ist, durch Verschieben des Fingers über den Sensorenbereich ein Erhöhen oder ein Erniedrigen der Drehzahl des Ventilators für die Belüftung möglich ist. Die Anwahl der Drehgeschwindigkeit des Ventilators wird dadurch angezeigt, dass die Lichtintensität und/oder die Farbe im Hintergrund, wie bei den anderen Tasten und Drehstellungen beschrieben, veränderbar ist, beispielsweise von der Farbe Blau, die für "Aus" steht, über die Farben Grün und Gelb, die für geringe und mittlere Drehzahl stehen, sowie der Farbe Rot für maximale Drehzahl.

Neben dem Drehsteller 12 ist ein weiterer Drehsteller 13 mit Wipptaste dargestellt. Die Funktionalität ist analog zum Drehsteller 11, jedoch wird beim Drehsteller 13 die Funktion der Luftverteilung, Piktogramm 39, Luftverteilung nach oben, Piktogramm 40, Luftverteilung, zur Mitte, Piktogramm 41, Luftverteilung nach unten und zur Mitte, ausgewählt. Das Piktogramm 38 zeigt die Funktion der maximalen Entfrostung für die Windschutzscheibe. Die Funktionsauswahl sowie die Anzeige der ausgewählten Funktion erfolgt, wie bereits bei den vorherigen Drehstellern 11, 12 beschrieben, anhand der Einstellung der Lichtintensität und/oder der Farbe der Hinterleuchtung.

Im Weiteren ist ein Leuchtband vorgesehen, das die Blende 2 und damit auch die Bedienkonsole 1 teilabschnittsmäßig mit den Teilabschnitten 14-1, 14-2 und 14-3 umläuft. Dies ist eine optische Auflockerung der Blende 2. Das Leuchtband 14-1, 14-2 und 14-3 ist in der eingangs beschriebenen Weise der Blende 2 hergestellt und lichtdurchlässig. Hinter der Blende 2 bzw. Bedienkonsole 1 angeordnete Beleuchtungselemente, z. B. in Form von RGB-Leuchtdioden, ist das Leuchtband 14-1, 14-2, 14-3 in der Leuchtintensität sowie in der Farbe variierbar.

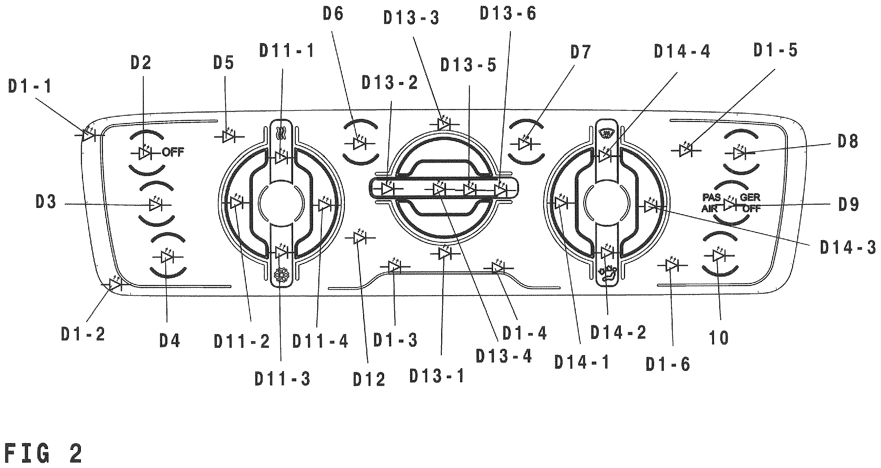

In FIG 2 ist die Bedienkonsole 1 aus FIG 1 dargestellt, jedoch ist ein Schnitt durch die Bedienkonsole 1 in der Weise dargestellt, dass die Beleuchtungselemente D1 bis D14, die in FIG 2 als RGB-Dioden ausgestaltet sind, erkennbar sind. Es ist ersichtlich, dass die Dioden D1 bis D6 dazu dienen, um das Leuchtband 14-1 bis 14-3 zu hinterleuchten. Die Diode D2 dient zur Hinterleuchtung der Taste 3. Die Diode D3 dient zur Hinterleuchtung der Taste 4, die Diode D4 dient zur Hinterleuchtung der Taste 5 [usw.]. Die Dioden D11-1 bis D11-4 dienen der Hinterleuchtung des Drehstellers 11, die Dioden D13-1 bis D13-6 dienen der Hinterleuchtung des Drehstellers 12, die Dioden D14-1 bis D14-4 dienen der Hinterleuchtung des Drehstellers 13.

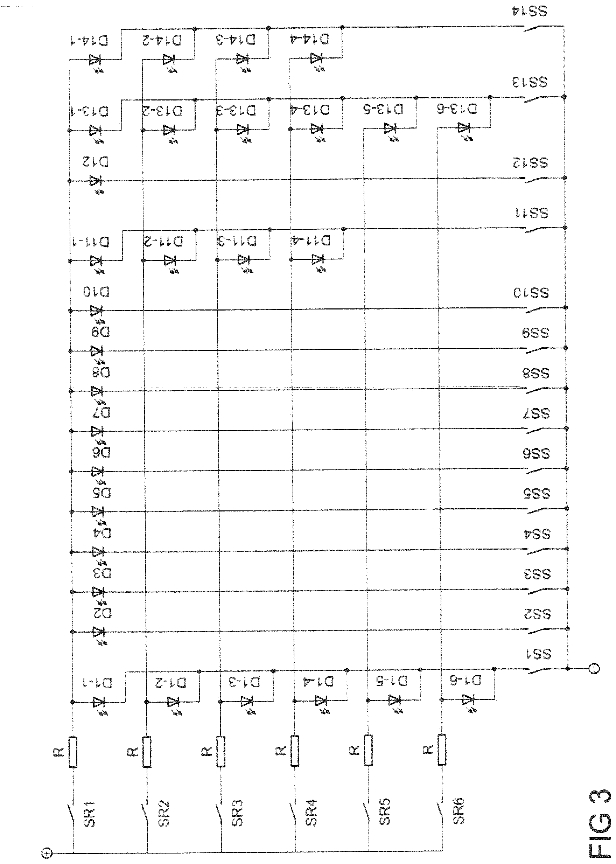

In FIG 3 ist der schematische Aufbau der elektrischen Beschaltung der Leuchtdioden D1 bis D14 dargestellt. Die Leuchtdioden D1 bis D14 sind in einer Matrix angeordnet und beschaltet. Die Matrix ist aufgeteilt in Reihen und Spalten. Die Dioden D1 bis D14 sind spaltenmäßig der zu beleuchtenden Taste oder dem zu beleuchtenden Drehsteller zugeordnet. Die Leuchtdiode D1-1 bis D1-6, die zur Hinterleuchtung und Beleuchtung des Leuchtbandes 14-1 bis 14-3 in FIG 1 und FIG 2 dienen, sind in einer Spalte untereinander angeordnet. Die Leuchtdioden D2 bis D10 und D12 sind parallel zueinander in jeweils einer Spalte angeordnet, die Leuchtdioden D11-1 bis D11-4 sind, analog den Leuchtdioden D1-1 bis D1-6 in einer Spalte angeordnet. Gleiches gilt für die Leuchtdioden D13-1 bis D13-6 sowie D14-1 bis D14-4.

Im Weiteren ist jeweils für jede Diodenreihenanordnung ein Vorwiderstand R und jeweils ein Schalter SR1 bis SR6 sowie für jede Spalte ein Schalter SS1 bis SS14 vorhanden. Die Schalter SR1 bis SR6 und SS1 bis SS14 sind von der Steuereinheit ansteuerbar. Die Steuereinheit, die nicht dargestellt ist, kann nunmehr durch Schalten der einzelnen Schalter SR1 bis SR6 für die Reihen sowie SS1 bis SS14 für die Spalten, jede einzelne der Dioden D1 bis D14 zum Leuchten bringen.

Die Wahl der Intensität der Lichtabgabe einer der Dioden D1 bis D14 erfolgt durch eine Ansteuerung mit pulsweiter Modulation. Durch eine ausreichend schnelle Ansteuerung kann damit individuell eine Beleuchtung/Hinterleuchtung der Bedienkonsole für jedes einzelne Bedienelement individuell erfolgen ohne dass zur jeden einzelnen Diode D1 bis D14 direkt eine einzelne Verkabelung liegen muss. Vielmehr können die Dioden D1 bis D14 entsprechend der FIG 3 angeordnet, beschalten und verbunden werden. Besonders vorteilhaft ist, dass es durch die Anordnung und die Beschaltung möglich ist, einzelne Reihen oder Spalten gemeinsam anzusprechen, so dass beispielsweise eine gleichmäßige Hinterleuchtung der gesamten Bedienkonsole durch Aktivierung der einzelnen Dioden D1 bis D14 oder von mehreren Dioden D1 bis D14 gemeinsam möglich ist.

Durch die Zusammenfassung der Leuchtdioden einer Bedienvorrichtung, wie Taster oder Drehsteller oder Leuchtbandes, in einer Spalte, ermöglicht es die Hinterleuchtung z. B. für einen Drehsteller, dem die Leuchtdioden D13-1 bis D13-6 zugeordnet sind, gemeinsam durch entsprechende Ansteuerung der Schalter SR1 bis SR6 und SS1 bis SS14 vorzusehen.

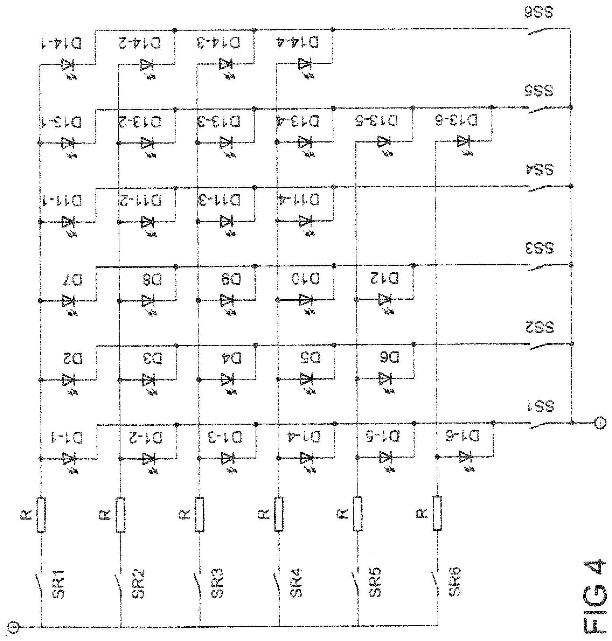

In FIG 4 ist ein weiterer schematischer Aufbau der elektrischen Beschaltung der Leuchtdioden D1 bis D14 dargestellt. Die Leuchtdioden D1 bis D14 sind in einer Matrix angeordnet und beschaltet. Die Matrix ist aufgeteilt in Reihen und Spalten, wobei aber bei der Beschaltung der Leuchtdioden darauf geachtet worden ist, die Anzahl der Spalten und Reihen, gegenüber der Darstellung in FIG 4, zu optimieren.

So sind jeweils in einer Spalte maximal sechs Leuchtdioden angeordnet.

Es sind diejenigen mehreren Leuchtdioden D1-1 bis D1-6, D11-1 bis D11-4, D13-1 bis D13-6 und D14-1 bis D14-4 in einer Spalte zusammengefasst.

Die Leuchtdioden D2, D3, D4, D5, D6 und die Leuchtdioden D7, D8, D9, D10, D12 sind nunmehr ebenfalls in einer Reihe angeordnet. Damit kann die Anzahl der notwendigen Leitungen für die Martixverschaltung und die Anzahl der Schalter reduziert werden. In der Ausgestaltung nach FIG 4 sind nur noch fünf Schalter SS1 bis SS5 für die fünf Spalten notwendig.

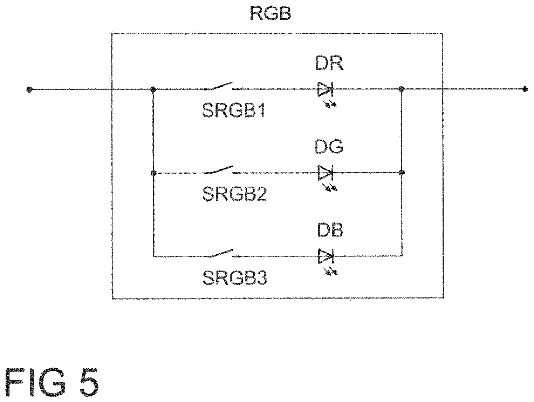

In FIG 5 ist eine Ausgestaltung einer der Leuchtdioden D1 bis D14 dargestellt. Bei jeder der Leuchtdioden handelt es sich um eine RGB-Diode. Diese RGB-Diode RGB ist in der Weise realisiert, dass dort jeweils eine Leuchtdiode für die Farbe Blau DB, für die Farbe Grün DG sowie für die Farbe Rot DR vorgesehen ist. Vor jeder Diode DB, DG, DR ist ggf. ein Vorwiderstand, in jedem Fall aber ein Schalter SRGB1 für die blau Leuchtdiode DB, ein Schalter SRGB2 für die gelbe Diode DG und ein Schalter SRGB3 für die rote Diode DR vorgesehen. Durch Aktivierung der Schalter SRGB1 bis SRGB3, einzeln und/oder gemeinsam, kann die Farbe, die abgestrahlt werden soll eingestellt werden. Durch eine geeignete Pulsmodulationsansteuerung ist es möglich die Leuchtintensität einer der Dioden DB, DG, DR anzusteuern und auch die Farben der Dioden zu mischen und somit auch weißes Licht zu erzeugen. Normalerweise sind RGB-Dioden in der Weise ausgestaltet, dass eine RBG Diode drei Eingangsleitungen besitzt, für jede der einzelnen Dioden eine eigene. Durch ein Ansteuerung der einzelnen Dioden, der Roten, der Grünen, der Blauen, kann eine jede Farbe eingestellt werden.

Bei der konkreten Darstellung gemäß FIG 3 und FIG 4 sind eigentlich für jede der farbigen Dioden, eben Rot, Gelb und Blau eine eigene Matrix vorhanden.

## Patentansprüche

1. Bedienkonsole (1) für ein Kraftfahrzeug mit einer aus einem im Wesentlichen lichtundurchlässigen Material bestehenden Blende (2), wobei die Blende (2) mindestens einen Bedienbereich (3, 4, 5, 6, 7, 8, 9, 10, 11, 12, 13), wobei ein Bedienbereich (3 bis 13) ein Schalter oder Taster (3, 4, 5, 6, 7, 8, 9, 10) oder ein Drehsteller (11, 12, 13) oder ein Schieber ist, und mindestens einen Visualisierungsbereich (14, 15, 16, 17, 18, 19, 20, 21, 22, 23, 24, 25, 26, 30) in Form mindestens einer Aussparung oder mindestens eines lichtdurchlässigen Bereichs, wobei ein Visualisierungsbereich (14 bis 40) eine Anzeige (30), eine Teilumrahmung (14, 15, 16, 17, 18, 19, 20, 21, 22, 34, 36, 37) eines Bedienbereichs oder ein lichtdurchlässiger Bereich der Blende (2) ist, aufweist, und wobei einem jeden mindestens einen Bedienbereich (3, 4, 5, 6, 7, 8, 9, 10, 11, 12, 13) oder einem jeden mindestens einen Visualisierungsbereich (14, 15, 16, 17, 18, 19, 20, 21, 22, 23, 24, 25, 26, 30) mindestens eine Beleuchtungsstelle (D1 bis D14) zugeordnet ist, die mindestens eine Leuchtdiode aufweist, die Beleuchtungsstellen (D1 bis D14) der Blende (2) elektrisch in einer Matrixstruktur angebunden sind, in der Weise, dass eine jede der Beleuchtungsstellen (D1 bis D14) einzeln und individuell oder eine Mehrzahl der Beleuchtungsstellen (D1 bis D14) gemeinsam von einer elektronischen Steuereinheit in der Weise ansteuerbar sind, dass die Farbe und die Helligkeit einer jeden der Beleuchtungsstellen (D1 bis D14) einzeln und individuell oder eine Mehrzahl der Beleuchtungsstellen gemeinsam (D1 bis D14) in ihrer Helligkeit und Farbe einstellbar sind, und wobei ein Bedienbereich als Schalter oder Taster (5, 10) vorhanden ist, über den in mehreren anwählbaren Stufen die Intensität der Energiezufuhr in eine Sitzheizung eines Fahrzeugsitzes realisiert ist, wobei der Schalter oder Taster (5, 10) in einer rückwärtigen Aussparung der Bedienkonsole (1) angeordnet ist, und wobei der Schalter oder Taster (5, 10) als induktives oder kapazitives Bedienelement hinter oder in der Blende (2) angeordnet oder intergiert ist und wobei der Schalter oder Taster (5, 10) selbst in seiner Bedienoberfläche einen lichtdurchlässigen Bereich (25, 29) aufweist und die Aussparung von dem Visualisierungsbereich (17-1, 17-2, 20-1, 20-2) umgeben ist, wobei die dem Schalter oder Taster (5, 10) zugeordnete Beleuchtungsstelle (D4, D10) hinter der Blende (2) so angeordnet ist, dass diese sowohl den Schalter oder Taster (5, 10) umgebenden Visualisierungsbereich (17-1, 17-2, 20-1, 20-2) als auch den Schalter oder Taster (5, 10) selbst hinterleuchtet.

2. Bedienkonsole nach Patentanspruch 1, **dadurch gekennzeichnet, dass** die Matrixstruktur der Beleuchtungsstellen (D1 bis D14) in einer elektrischen Anordnung der Beleuchtungsstellen (D1 bis D14) in Reihen und Spalten ausgebildet ist.

3. Bedienkonsole nach Patentanspruch 1, **dadurch gekennzeichnet, dass** die mindestens eine Leuchtdiode eine RGB-Leuchtdiode oder eine RGBW-Leuchtdiode ist.

4. Bedienkonsole nach einem oder mehreren der vorangehenden Patentansprüche 1 bis 3, **dadurch gekennzeichnet, dass** die Ansteuerung der Beleuchtungsstellen (D1 bis D14) im LED-Multiplex erfolgt.

5. Bedienkonsole nach Patentanspruch 1, **dadurch gekennzeichnet, dass** eine elektronische Steuereinheit die Beleuchtungsstelle (D4, D10) derart ansteuert, dass die Helligkeit und/oder die Farbe der Beleuchtungsstelle (D4, D10) in Abhängigkeit der gewählten Intensität der Energiezufuhr erfolgt.

6. Bedienkonsole nach einem oder mehreren der vorangehenden Patentansprüche, **dadurch gekennzeichnet, dass** über einen Drehschalter oder -steller (12) die Innenraumbelüftung im Kraftfahrzeug einstellbar ist, wobei der Drehschalter oder - steller (12) in einer Aussparung der Blende (2) und der Bedienkonsole (1) angeordnet ist und diese Aussparung von einem Visualisierungsbereich (35-1, 35-2) in der Blende (2) umgeben ist und die dem Drehschalter oder -steller (12) zugeordnete Beleuchtungsstelle (D13-1 bis D13-6) von der elektronischen Steuereinheit so ansteuerbar ist, dass die Helligkeit und/oder die Farbe der Beleuchtungsstelle (D13-1 bis D13-6) in Abhängigkeit der gewählten Drehzahl des den Luftstrom erzeugenden elektrischen Ventilators erfolgt.

7. Bedienkonsole nach einem oder mehreren der vorangehenden Patentansprüche, **dadurch gekennzeichnet, dass** der den Bedienbereich (3; 4; 5; 6; 7; 8; 9; 10; 11; 12; 13) umrahmende Visualisierungsbereich (15-1, 15-2; 16-1, 16,-2; 17-1, 17-2; 18-1, 18-2; 19-1; 19-2; 20-1, 20-2; 21-1, 21-2; 22-1, 22-2; 34-1, 34-2; 36-1, 36-2; 37-1, 37-2) im Wesentlich die gleiche Grundform aufweist, wie der vom Visualisierungsbereich (15-1, 15-2; 16-1, 16,-2; 17-1, 17-2; 18-1, 18-2; 19-1; 19-2; 20-1, 20-2; 21-1, 21-2; 22-1, 22-2; 34-1, 34-2; 36-1, 36-2; 37-1, 37-2) teilumrahmte Bedienbereich (3; 4; 5; 6; 7; 8; 9; 10; 11; 12; 13).

8. Bedienkonsole nach einem oder mehreren der vorangehenden Patentansprüche, **dadurch gekennzeichnet, dass** mittels der elektronischen Steuereinheit die Beleuchtungsstellen (D1 bis D14) in ihrer Helligkeit und/oder ihrer Farbe einstellbar sind.

## Claims

1. Control console (1) for a motor vehicle with a panel (2), which consists of a substantially light-impermeable material and which has at least one control region (3, 4, 5, 6, 7, 8, 9, 10, 11, 12, 13), wherein a control region (3 to 13) is a switch or button (3, 4, 5, 6, 7, 8, 9, 10) or a rotary setter (11, 12, 13) or a slide, and at least one visualisation region (14, 15, 16, 17, 18, 19, 20, 21, 22, 23, 24, 25, 26, 30) in the form of at least one recess or at least one light-permeable region, wherein a visualisation region (14 to 40) is a display (30), a partial framing (14, 15, 16, 17, 18, 19, 20, 21, 22, 34, 36, 37) of a control region or a light-permeable region of the panel (2), and wherein at least one lighting point (D1 to D14), which comprises at least one light-emitting diode, is associated with each at least one control region (3, 4, 5, 6, 7, 8, 9, 10, 11, 12, 13) or each at least one visualisation region (14, 15, 16, 17, 18, 19, 20, 21, 22, 23, 24, 25, 26, 30), the lighting points (D1 to D14) of the panel (2) being electrically connected in a matrix structure in such a way that each of the lighting points (D1 to D14) is activatable singly and individually, or a plurality of the lighting points (D1 to D14) is activatable in common, by an electronic control unit in such a way that the colour and the brightness of each of the lighting points (D1 to D14) is singly and individually settable, or a plurality of the lighting points (D1 to D14) is settable in common, in the brightness and colour thereof, and wherein a control region is present as a switch or button (5, 10) by way of which in a plurality of selectable steps the intensity of the energy feed to seat heating means of a vehicle seat is realised, wherein the switch or button (5, 10) is arranged in a rearward recess of the control console (1), wherein the switch or button (5, 10) is arranged or integrated as an inductive or a capacitive control element behind or in the panel (2), wherein the switch or button (5, 10) has itself a light-permeable region (25, 29) in its operating surface and the recess is surrounded by the visualisation region (17-1, 17-2, 20-1, 20-2), and wherein the lighting point (D4, D10) associated with the switch or button (5, 10) is so arranged behind the panel (2) that this backlights not only the visualisation region (17-1, 17-2, 20-1, 20-2) surrounding the switch or button (5, 10), but also the switch or button (5, 10) itself.

2. Control console according to claim 1, **characterised in that** the matrix structure of the lighting points (D1 to D14) is constructed in an electrical arrangement of the lighting points (D1, D14) in rows and columns.

3. Control console according to claim 1, **characterised in that** the at least one light-emitting diode is an RGB light-emitting diode or an RGBW light-emitting diode.

4. Control console according to one or more of the preceding claims 1 to 3, **characterised in that** activation of the lighting points (D1 to D14) takes place in the LED multiplex.

5. Control console according to claim 1, **characterised in that** an electronic control unit activates the lighting points (D4, D10) in such a way that the brightness and/or the colour of the lighting point (D4, D10) is or are realised in dependence on the selected intensity of the energy feed.

6. Control console according to one or more of the preceding claims, **characterised in that** the interior space ventilation in the motor vehicle is settable by way of a rotary switch or rotary setter (12), wherein the rotary switch or rotary setter (12) is arranged in a recess of the panel (2) and the control console (1) and this recess is surrounded by a visualisation region (35-1, 35-2) in the panel (2) and the lighting point (D13-1 to D13-6) associated with the rotary switch or rotary setter (12) is so activatable by the electronic control unit that the brightness and/or the colour of the lighting point (D13-1 to D13-6) is or are realised in dependence on the selected rotational speed of the electric fan generating the air flow.

7. Control console according to one or more of the preceding claims, **characterised in that** the visualisation region (15-1, 15-2; 16-1, 16-2; 17-1, 17-2; 18-1, 18-2; 19-1, 19-2; 20-1, 20-2; 21-1, 21-2; 22-1, 22-2; 34-1, 34-2; 36-1, 36-2; 37-1, 37-2) framing the control region (3; 4; 5; 6; 7; 8; 9; 10; 11; 12; 13) has substantially the same basic shape as the control region (3; 4; 5; 6; 7; 8; 9; 10; 11; 12; 13) partially framed by the visualisation region (15-1, 15-2; 16-1, 16-2; 17-1, 17-2; 18-1, 18-2; 19-1, 19-2; 20-1, 20-2; 21-1, 21-2; 22-1, 22-2; 34-1, 34-2; 36-1, 36-2; 37-1, 37-2).

8. Control console according to one or more of the preceding claims, **characterised in that** the lighting points (D1 to D14) are settable in the brightness and/or colour thereof by means of the electronic control unit.

## Revendications

1. Console de commande (1) pour un véhicule à moteur avec un panneau (2), constitué d'un matériau globalement opaque, le panneau (2) comprenant au moins une zone de commande (3, 4, 5, 6, 7, 8, 9, 10, 11, 12, 13), une zone de commande (3 à 13) étant un commutateur ou un bouton (3, 4, 5, 6, 7, 8, 9, 10) ou un actionneur rotatif (11, 12, 13) ou un curseur, et au moins une zone de visualisation (14, 15, 16, 17, 18, 19, 20, 21, 22, 23, 24, 25, 26, 30) sous la forme d'au moins un évidement ou d'au moins une zone translucide, une zone de visualisation (14 à 40) étant un affichage (30), un encadrement partiel (14, 15, 16, 17, 18, 19, 20, 21, 22, 34, 36, 37) d'une zone de commande ou une zone translucide du panneau (2), et à chacune des zones de commande (3, 4, 5, 6, 7, 8, 9, 10, 11, 12, 13) ou à chacune des zones de visualisation (14, 15, 16, 17, 18, 19, 20, 21, 22, 23, 24, 25, 26, 30) correspond au moins un point d'éclairage (D1 à D14), qui comprend au moins une diode électroluminescente, les points d'éclairage (D1 à D14) du panneau (2) étant reliés électriquement dans une structure matricielle de façon à ce que chacun des points d'éclairage (D1 à D14) puisse être contrôlé séparément et individuellement ou à ce qu'une pluralité de points d'éclairage (D1 à D14) puissent être contrôlés ensemble par une unité de commande électronique, de façon à ce que la couleur et la luminosité de chacun des points d'éclairage (D1 à D14) puisse être contrôlée séparément et individuellement ou à ce qu'une pluralité de points d'éclairage (D1 à D14) puissent être contrôlés ensemble en ce qui concerne leur luminosité et leur couleur, et une zone de commande étant prévue sous la forme d'un commutateur ou d'un bouton (5, 10), par l'intermédiaire duquel, en plusieurs étapes sélectionnables, l'intensité de l'alimentation en énergie est contrôlée dans un chauffage d'un siège du véhicule, le commutateur ou le bouton (5, 10) étant disposé dans un évidement à l'arrière de la console de commande (1) et le commutateur ou le bouton (5, 10) étant disposé ou intégré sous la forme d'un élément de commande inductif ou capacitif derrière ou dans le panneau (2) et le commutateur ou le bouton (5, 10) comprenant lui-même, sur sa surface de commande, une zone translucide (25, 29) et l'évidement étant entouré par la zone de visualisation (17-1, 17-2, 20-1, 20-2), le point d'éclairage (D4, D10) correspondant au commutateur ou au bouton (5, 10) étant disposé derrière le panneau (2) de façon à ce que celui-ci rétro-éclaire aussi bien la zone de visualisation (17-1, 17-2, 20-1, 20-2) entourant le commutateur ou le bouton (5, 10) que le commutateur ou le bouton (5, 10) lui-même.

2. Console de commande selon la revendication 1, **caractérisée en ce que** la structure matricielle des points d'éclairage (D1 à D14) est réalisée dans une disposition électrique des points d'éclairage (D1 à D14) en lignes et colonnes.

3. Console de commande selon la revendication 1, **caractérisée en ce que** l'au moins une diode électroluminescente est une diode électroluminescente RGB ou une diode électroluminescente RGBW.

4. Console de commande selon l'une des revendications 1 à 3, **caractérisée en ce que** la commande des points d'éclairage (D1 à D14) a lieu par multiplexage des LED.

5. Console de commande selon la revendication 1, **caractérisée en ce qu'**une unité de commande électronique contrôle le point d'éclairage (D4, D10) de façon à ce que la luminosité et/ou la couleur du point d'éclairage (D4, D10) soit contrôlée en fonction de l'intensité choisie de l'alimentation en énergie.

6. Console de commande selon l'une des revendications précédentes, **caractérisée en ce qu'**un commutateur ou actionneur rotatif (12) permet de régler la ventilation de l'habitacle du véhicule, le commutateur ou actionneur rotatif (12) étant disposé dans un évidement du panneau (2) et de la console de commande (1) et cet évidement est entouré d'une zone de visualisation (35-1, 35-2) du panneau (2) et le point d'éclairage (D13-1 à D13-6) correspondant au commutateur ou actionneur rotatif (12) pouvant être contrôlé par l'unité de commande électronique de façon à ce que la luminosité et/ou la couleur du point d'éclairage (D13-1 à D13-6) soit contrôlée en fonction de la vitesse de rotation choisie du ventilateur électrique produisant le flux d'air.

7. Console de commande selon l'une des revendications précédentes, **caractérisée en ce que** la zone de visualisation (15-1, 15-2; 16-1, 16-2 ; 17-1, 17-2 ; 18-1, 18-2 ; 19-1, 19-2 ; 20-1, 20-2 ; 21-1, 21-2 ; 22-1, 22-2 ; 34-1, 34-2 ; 36-1, 36-2 ; 37-1, 37-2) encadrant la zone de commande (3 ; 4 ; 5 ; 6 ; 7 ; 8 ; 9 ; 10 ; 11 ; 12 ; 13) présente globalement la même forme de base que la zone de commande (3 ; 4 ; 5 ; 6 ; 7; 8 ; 9 ; 10 ; 11 ; 12 ; 13) partiellement encadrée par la zone de visualisation (15-1, 15-2 ; 16-1, 16-2 ; 17-1, 17-2 ; 18-1, 18-2 ; 19-1, 19-2 ; 20-1, 20-2 ; 21-1, 21-2 ; 22-1, 22-2 ; 34-1, 34-2 ; 36-1, 36-2 ; 37-1, 37-2).

8. Console de commande selon l'une des revendications précédentes, **caractérisée en ce que** l'unité de commande électronique permet de régler les points d'éclairage (D1 à D14) en ce qui concerne leur luminosité et/ou leur couleur.
